(19) Europäisches Patentamt
European Patent Office
Office européen des brevets

(11) **EP 4 130 117 A1**

(12) **EUROPEAN PATENT APPLICATION**
published in accordance with Art. 153(4) EPC

(43) Date of publication:
**08.02.2023 Bulletin 2023/06**

(21) Application number: **21779238.1**

(22) Date of filing: **25.02.2021**

(51) International Patent Classification (IPC):
**C08J 9/12** (1974.07)   **H01Q 1/42** (1968.09)
**G01S 7/03** (1990.01)

(52) Cooperative Patent Classification (CPC):
**B32B 5/18; B32B 7/025; C08J 9/12; G01S 7/03;
H01Q 1/42**

(86) International application number:
**PCT/JP2021/007218**

(87) International publication number:
**WO 2021/199809 (07.10.2021 Gazette 2021/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.03.2020 JP 2020064888**

(71) Applicant: **NITTO DENKO CORPORATION
Ibaraki-shi
Osaka 567-8680 (JP)**

(72) Inventors:
• **SAKAMOTO Koji**
  **Ibaraki-shi, Osaka 567-8680 (JP)**
• **ITO Takahiko**
  **Ibaraki-shi, Osaka 567-8680 (JP)**
• **NAGAOKA Naoki**
  **Ibaraki-shi, Osaka 567-8680 (JP)**
• **SASAKI Shu**
  **Ibaraki-shi, Osaka 567-8680 (JP)**
• **KATO Daiki**
  **Ibaraki-shi, Osaka 567-8680 (JP)**

(74) Representative: **Hoffmann Eitle
Patent- und Rechtsanwälte PartmbB
Arabellastraße 30
81925 München (DE)**

(54) **RESIN SHEET, LAYERED BODY, AND RADAR SYSTEM**

(57)    A resin sheet 1a includes a porous structure 10. The porous structure 10 is configured to adjust transmission of a millimeter wave. The porous structure 10 has a relative permittivity varying in stages in a thickness direction of the resin sheet 1a from a plane on which the millimeter wave is incident, the relative permittivity varying such that a difference between average relative permittivities in two adjacent layer portions is a predetermined value or less, the layer portions each having a particular thickness smaller than a wavelength of the millimeter wave. The porous structure has, as pores, only pores 12 each having a pore diameter equal to or less than 10% of the wavelength of the millimeter wave.

FIG. 1

EP 4 130 117 A1

**Description**

TECHNICAL FIELD

The present invention relates to a resin sheet, a laminate, and a radar system.

BACKGROUND ART

Radars have been used to detect objects. Adjusting members allowing transmission of radio waves from radars therethrough have been known.

For example, a system including a radar sensor and an adjusting member is described in Patent Literature 1. This system is to be mounted on a motor vehicle so that the adjusting member will allow transmission of a radio wave from the radar sensor therethrough. The adjusting member includes at least one layer that reflects a portion of the radio wave. The adjusting member includes an additional layer configured based on a thickness and a permittivity suitable for reducing reflection of the radio wave. The adjusting member is a bumper. The radar sensor is, for example, a 77-GHz radar.

CITATION LIST

Patent Literature

Patent Literature 1: US 2015/0109162 A1

SUMMARY OF INVENTION

Technical Problem

In the technique described in Patent Literature 1, the adjusting member includes the additional layer configured to reduce reflection of the radio wave. However, in Patent Literature 1, adjustment of transmission of a millimeter wave from a millimeter-wave radar using a frequency-modulated continuous wave (FMCW) is not taken into consideration.

Therefore, the present invention provides a resin sheet that is advantageous in view of adjusting transmission of a millimeter wave from a millimeter-wave radar using an FMCW.

Solution to Problem

The present invention provides a resin sheet including:

a porous structure configured to adjust transmission of a millimeter wave, wherein
the porous structure has a relative permittivity varying in stages in a thickness direction of the resin sheet from a plane on which the millimeter wave is incident, the relative permittivity varying such that a difference between average relative permittivities in two adjacent layer portions is a predetermined value or less, the layer portions each having a particular thickness smaller than a wavelength of the millimeter wave, and
the porous structure has, as pores, only pores each having a pore diameter equal to or less than 10% of the wavelength of the millimeter wave.

The present invention also provides a laminate configured to adjust transmission of a millimeter wave, including:

a member; and
the above resin sheet covering a surface of the member, wherein
the resin sheet has a surface in contact with air and a boundary surface in contact with the member,
the porous structure has: a first principal surface being the surface in contact with air or being closest to the surface in contact with air in the thickness direction of the resin sheet; and a second principal surface being the boundary surface or being closest to the boundary surface in the thickness direction of the resin sheet, and
a relative permittivity of the porous structure at the second principal surface is closer to a relative permittivity of the member than a relative permittivity of the porous structure at the first principal surface.

The present invention also provides a radar system including:

a millimeter-wave radar that uses a frequency-modulated continuous wave; and
the above resin sheet allowing transmission of a millimeter wave emitted from the millimeter-wave radar through the resin sheet.

Advantageous Effects of Invention

The above resin sheet is advantageous in view of adjusting transmission of a millimeter wave from a millimeter-wave radar using an FMCW. With the use of the above laminate and radar system, transmission of a millimeter wave from a millimeterwave radar using an FMCW can be adjusted to a desired state.

BRIEF DESCRIPTION OF DRAWINGS

FIG. 1 is a cross-sectional view showing an example of the resin sheet according to the present invention.
FIG. 2 is a cross-sectional view showing an example of using the resin sheet shown in FIG. 1.
FIG. 3 is a graph showing an example of a varying relative permittivity of a porous structure.
FIG. 4 is a cross-sectional view showing another example of the resin sheet according to the present invention.
FIG. 5 is a cross-sectional view showing an example of using the resin sheet shown in FIG. 3.
FIG. 6 is a graph showing an example of a varying relative permittivity of a porous structure.
FIG. 7 is a cross-sectional view showing an example of the laminate according to the present invention.
FIG. 8 shows an example of the radar system according to the present invention.
FIG. 9A is an X-ray CT image showing an example of a cross-section of a resin sheet according to Example 3.
FIG. 9B is an X-ray CT image showing an example of a cross-section of the resin sheet according to Example 3.

DESCRIPTION OF EMBODIMENTS

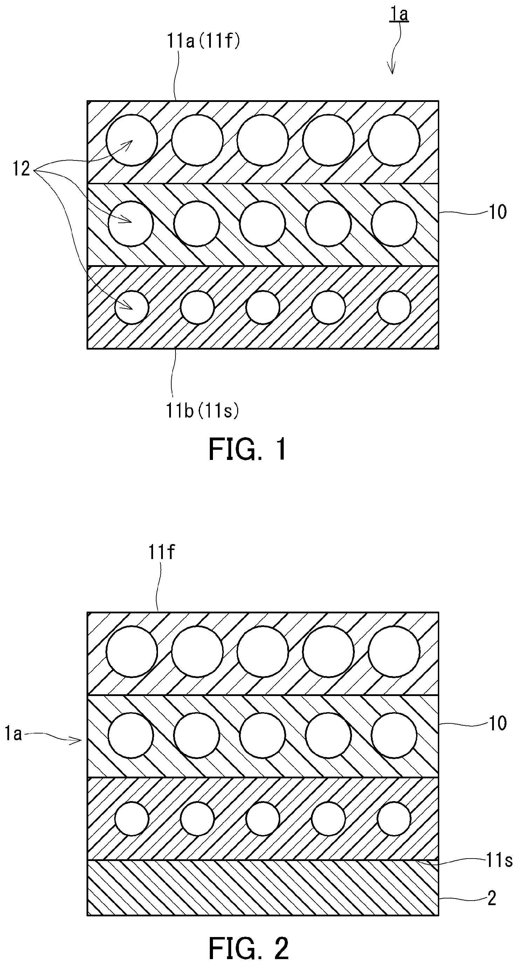

It is conceivable to use, for sensing a given object, a millimeter-wave radar using an FMCW. In this case, a given structure such as a housing may be needed to be disposed in a transmission-reception path of a millimeter wave to protect the millimeterwave radar. It is thought that widening a frequency range of a millimeter wave used for sensing an object using the above millimeter-wave radar is advantageous in improving the accuracy of object sensing. Therefore, the present inventors conducted intensive studies to invent a sheet capable of being included in a structure disposed in an transmission-reception path to protect a millimeter-wave radar, the sheet being capable of improving transmission of a millimeter wave in a wide frequency range. Through much trial and error, the present inventors have newly found that a resin sheet having a given porous structure is advantageous in enhancing transmission of a millimeter wave in a wide frequency range and have completed the present invention.
Hereinafter, embodiments of the present invention will be described with reference to the drawings. The following description describes examples of the present invention, and the present invention is not limited to the following embodiments.
As shown in FIG. 1, a resin sheet 1a includes a porous structure 10. The porous structure 10 is configured to adjust transmission of a millimeter wave. As shown in FIG. 2, when used, the resin sheet 1a is disposed, for example, between air and a solid 2 in a thickness direction of the resin sheet 1a. In other words, the resin sheet 1a has a surface 11a in contact with air and a boundary surface 11b in contact with the solid 2. In this case, for example, a millimeter wave is incident on the surface 11a. The porous structure 10 has, as pores, only pores 12 each having a pore diameter equal to or less than 10% of a wavelength of the millimeter wave. This makes it possible to prevent transmission of the millimeter wave from being affected by the sizes of the pores 12. The pore diameter of each pore 12 refers to, for example, the maximum diameter thereof observed in a scanning electron microscope (SEM) image of a cross-section of the porous structure 10. The pore diameter of each pore 12 may be determined based on the X-ray CT measurement result for the porous structure 10.

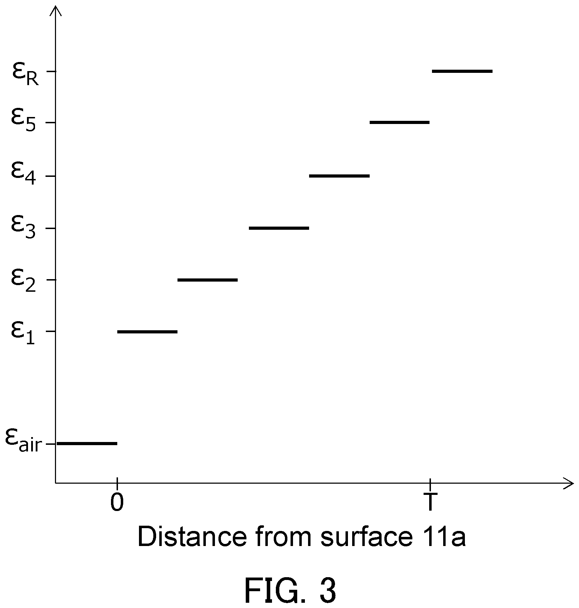

FIG. 3 shows an example of a varying relative permittivity of the porous structure 10. As shown in FIG. 3, the porous structure 10 has a relative permittivity varying in stages from a plane on which a millimeter wave is incident. The relative permittivity of the porous structure 10 is adjusted such that a difference $\Delta\varepsilon$ between average relative permittivities in two adjacent layer portions in the thickness direction of the resin sheet 1a is a predetermined value Ve or less, the layer portions each having a particular thickness $t_L$ smaller than the wavelength of the millimeter wave. Because of this, in the porous structure 10, a relative permittivity variation rapid enough to affect millimeter-wave propagation can be prevented at an interface between the porous structure 10 and another substance and inside the porous structure 10. This also allows the relative permittivity of the porous structure 10 to vary in stages in the thickness direction of the resin sheet 1a. Consequently, the resin sheet 1a can reduce reflection of the millimeter wave and can have an increased millimeter-wave transmittance. In particular, the resin sheet 1a can have an increased transmittance of a wideband millimeter wave from a millimeter-wave radar using an FMCW. With the resin sheet 1a, a transmission loss [dB] of a perpendicularly incident millimeter wave in a bandwidth of 60 to 80 GHz can be reduced by 50% or more, compared to the case without the resin sheet 1a.

Typically, the entire porous structure 10 satisfies the requirement that the difference $\Delta\varepsilon$ between average relative permittivities in the two adjacent layer portions is the predetermined value Ve or less, the layer portions each having the particular thickness $t_L$ smaller than the wavelength of a millimeter wave.

In FIG. 3, a distance T from the surface 11a corresponds to the thickness of the porous structure 10. In FIG. 3, $\varepsilon_{air}$ represents a relative permittivity of air, $\varepsilon_R$ represents a relative permittivity of the solid 2, relative permittivities $\varepsilon_1$, $\varepsilon_2$, $\varepsilon_3$, $\varepsilon_4$, and $\varepsilon_5$ are the average relative permittivities of the layer portions each having the particular thickness $t_L$ in the porous structure 10. A boundary between each two adjacent layer portions may be real or imaginary.

An average relative permittivity $\varepsilon_L$ in each layer portion of the porous structure 10 can be determined, for example, by the following equation (1). In the equation (1), $\varepsilon_K$ is a relative permittivity of the material of a skeleton of the porous structure 10, $\varepsilon_{air}$ is the relative permittivity of air, and p is a porosity ($0 < p < 1$) in the layer portion. The porosity in each layer portion can be determined, for example, based on the X-ray CT measurement result for the porous structure 10. The relative permittivity of the material of the skeleton of the porous structure 10 is, for example, a relative permittivity measured at 10 GHz by a cavity resonance method.

$$\varepsilon_L = p \times \varepsilon_{air} + (1 - p)\varepsilon_K \quad \text{Equation (1)}$$

The particular thickness $t_L$ is not limited to a particular value as long as the particular thickness $t_L$ is smaller than the wavelength of a millimeter wave. The particular thickness $t_L$ is, for example, 100 $\mu$m. The predetermined value Ve is not limited to a particular value as long as the resin sheet 1a can have an increased transmittance of a millimeter wave. The predetermined value Ve is, for example, 0.3. The predetermined value Ve is desirably 0.25.

The largest value of $\Delta\varepsilon$ in the porous structure 10 is not limited to a particular value. The largest value of $\Delta\varepsilon$ is, for example, 0.1 or more and 0.3 or less. This prevents an increase of the thickness of the porous structure 10 when the porous structure 10 is formed so as to have a relative permittivity varying in stages in the thickness direction of the resin sheet 1a from the plane on which a millimeter wave is incident.

The thickness of the porous structure 10 is not limited to a particular value as long as the resin sheet 1a can have an increased transmittance of a millimeter wave. The porous structure 10 has a thickness of, for example, 1 mm or more. In this case, the resin sheet 1a can have an increased transmittance of a millimeter wave and can protect a millimeter-wave radar as appropriate.

The thickness of the porous structure 10 is desirably 2 mm or more, and more desirably 3 mm or more. The thickness of the porous structure 10 is, for example, 10 mm or less. This makes it easy to reduce the weight of the resin sheet 1a.

The relative permittivity of the porous structure 10 is not limited to a particular value as long as the relative permittivity varies in stages from the plane on which a millimeter wave is incident. The porous structure 10 has a relative permittivity of, for example, 1.01 or more and 4.99 or less. In this case, the resin sheet 1a can have an increased transmittance of a millimeter wave more reliably.

The relative permittivity $\varepsilon_K$ of the material of the skeleton of the porous structure 10 is not limited to a particular value as long as the resin sheet 1a can have an increased transmittance of a millimeter wave. The relative permittivity $\varepsilon_K$ is, for example, 2.2 to 5.0.

The material of the skeleton of the porous structure 10 is not limited to a particular material as long as the resin sheet 1a can have an increased transmittance of a millimeter wave. Examples of the material include polyethylene, polypropylene, polystyrene, polyester, polyamide, polyvinyl chloride, polyvinylidene chloride, polybutene, polyacetal, polyphenylene oxide, polymethylmethacrylate, polysulfone, polyethersulfone, polyetherketone, polyetheretherketone, polyamide-imide, polycarbonate, polyarylate, polyimide, fluorine resin, ethylene-propylene resin, ethylene-ethylacrylate, epoxy resin, urethane resin, imide resin, acrylic resin, and norbornene resin. The skeleton of the porous structure 10 may include only one resin material or may include a plurality of resin materials. The skeleton of the porous structure 10 may be formed of a polymer alloy or may be formed of a composite material of a resin matrix and a filler.

As described above, the resin sheet 1a has the surface 11a and the boundary surface 11b. The porous structure 10 has, for example, a first principal surface 11f being the surface 11a and a second principal surface 11s being the boundary surface 11b.

The porous structure 10 has, for example, a relative permittivity of 1.75 or less at the first principal surface 11f and a relative permittivity of 1.8 or more at the second principal surface 11s. In this case, the relative permittivity of the porous structure 10 at the first principal surface 11f is likely to be close to the relative permittivity $\varepsilon_{air}$ of air, and the relative permittivity of the porous structure 10 at the second principal surface 11s is likely to be close to the relative permittivity

$\varepsilon_R$ of the solid 2.

For example, by changing the porosity in stages in the thickness direction of the porous structure 10, the relative permittivity of the porous structure 10 can be adjusted so as to vary in stages from the plane on which a millimeter wave is incident.

As shown in FIG. 3, the relative permittivity of the porous structure 10 varies, for example, in the thickness direction of the resin sheet 1a in a way that can be regarded as discrete. Such a porous structure 10 can be formed, for example, by laminating a plurality of homogeneous porous layers having different porosities. Alternatively, such a porous structure 10 may be formed by 3D printing.

The pore diameter of each pore 12 of the porous structure 10 is not limited to a particular value as long as the pore diameter is equal to or less than 10% of the wavelength of a millimeter wave. The pore diameter of each pore 12 is desirably equal to or less than 7% of the wavelength of a millimeter wave.

The pores 12 each have a pore diameter of, for example, 20 to 500 $\mu$m. In this case, the resin sheet 1a can have an increased transmittance of a millimeter wave more reliably. The pore diameter of each pore 12 may be 450 $\mu$m or less, 400 $\mu$m or less, or 350 $\mu$m or less.

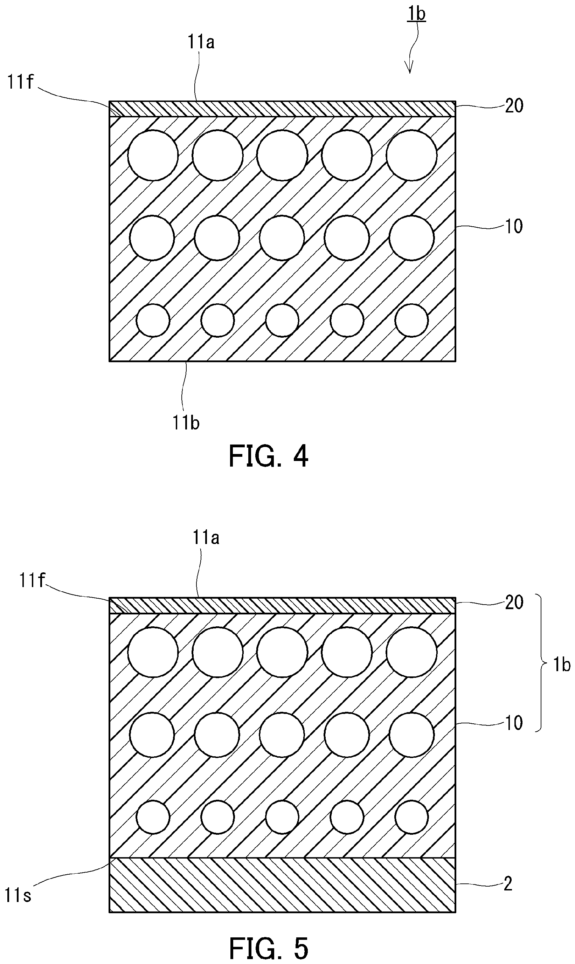

A resin sheet 1b shown in FIG. 4 can also be provided. The resin sheet 1b is configured in the same manner as the resin sheet 1a, unless otherwise described. The components of the resin sheet 1b that are the same as or correspond to those of the resin sheet 1a are denoted by the same reference characters, and detailed descriptions of such components are omitted. The description given for the resin sheet 1a can apply to the resin sheet 1b, unless there is technical inconsistency.

The resin sheet 1b further includes a skin layer 20 in addition to the porous structure 10. The skin layer 20 has a thickness equal to or less than 10% of the wavelength of a millimeter wave and forms the surface 11a in contact with air. Since the thickness of the skin layer 20 is equal to or less than 10% of the wavelength of a millimeter wave, the effect of the skin layer 20 on transmission of a millimeter wave is easily reduced even when the skin layer 20 has a relatively high relative permittivity.

The skin layer 20 is typically a solid layer. The thickness of the skin layer 20 is, for example, 500 $\mu$m or less, desirably 450 $\mu$m or less, and more desirably 400 $\mu$m or less. The skin layer 20 has, for example, a relative permittivity of 1.5 or more.

As shown in FIG. 5, as in the case of the resin sheet 1a, the resin sheet 1b is, for example, disposed between air and the solid 2 in a thickness direction of the resin sheet 1b when used. As shown in FIG. 4, in the resin sheet 1b, the porous structure 10 has the first principal surface 11f and the second principal surface 11s. The first principal surface 11f is a principal surface of the porous structure 10, the principal surface being closest to the surface 11a in the thickness direction of the resin sheet 1b. The second principal surface 11s is a principal surface being the boundary surface 11b. The porous structure 10 has a relative permittivity of 1.75 or less at the first principal surface 11f and a relative permittivity of 1.8 or more at the second principal surface 11s.

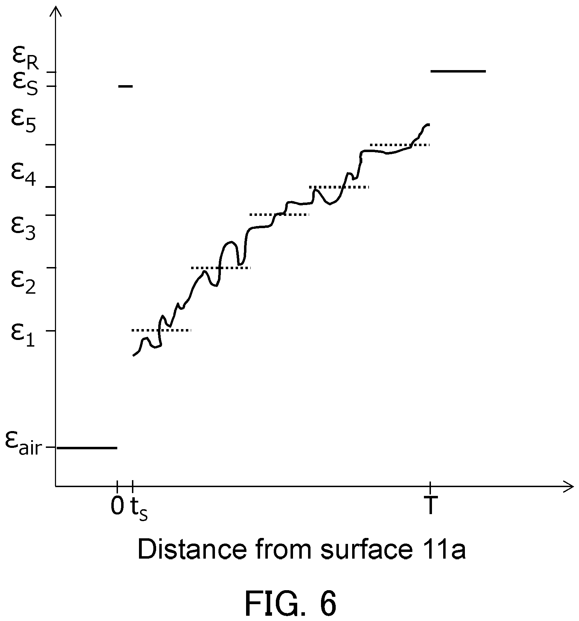

FIG. 6 shows an example of a relation between the distance from the surface 11a and the relative permittivity in the thickness direction of the resin sheet 1b. In FIG. 6, a distance ts corresponds to the thickness of the skin layer 20, the distance T corresponds to the thickness of the resin sheet 1b, and T - ts corresponds to the thickness of the porous structure 10. In FIG. 6, $\varepsilon_S$ represents the relative permittivity of the skin layer 20. The skin layer 20 has a higher relative permittivity, for example, than that of the porous structure 10 at the first principal surface 11f.

As shown in FIG. 6, in the resin sheet 1b, the relative permittivity of the porous structure 10 varies, for example, in the thickness direction of the resin sheet 1a in a way that can be regarded as continuous. Such a porous structure 10 can be formed, for example, by foam injection molding. Alternatively, such a porous structure 10 may be formed by 3D printing.

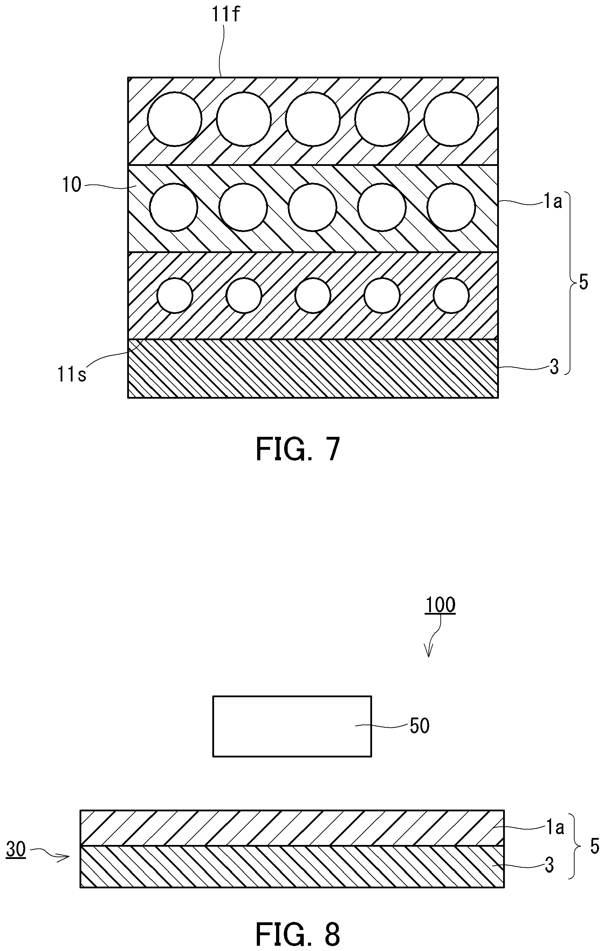

As shown in FIG. 7, for example, a laminate 5 configured to adjust transmission of a millimeter wave can be provided using the resin sheet 1a. The laminate 5 includes a member 3 and the resin sheet 1a. The resin sheet 1a covers a surface of the member 3. In the laminate 5, the resin sheet 1a has the surface 11a in contact with air and the boundary surface 11b in contact with the member 3. The porous structure 10 has the first principal surface 11f being the surface 11a and the second principal surface 11s being the boundary surface 11b. A relative permittivity $\varepsilon_A$ of the porous structure 10 at the second principal surface 11s is a value closer to a relative permittivity $\varepsilon_C$ of the member 3 than a relative permittivity $\varepsilon_B$ of the porous structure 10 at the first principal surface 11f. In other words, the laminate 5 satisfies a relation $|\varepsilon_C - \varepsilon_A| < |\varepsilon_C - \varepsilon_B|$. Because of this, a relative permittivity variation rapid enough to affect millimeter-wave propagation is prevented at the boundary surface 11b, and the millimeter-wave transmittance can be increased.

In the laminate 5, the resin sheet 1a may be joined, for example, to the member 3 by welding, adhesion, or pressure-sensitive adhesion. The laminate 5 may include an adhesive layer or a pressure-sensitive adhesive layer between the resin sheet 1a and the member 3.

The laminate 5 may be modified to include the resin sheet 1b instead of the resin sheet 1a. In this case, in the porous structure 10, a principal surface closest to the surface 11a of the resin sheet 1a is the first principal surface 11f.

The laminate 5 may be modified such that the surface 11a is in contact with an additional member. In this case, the additional member has a relative permittivity equal to or less than the relative permittivity $\varepsilon_B$ of the porous structure 10 at the first principal surface 11f.

As shown in FIG. 8, for example, a radar system 100 can be provided using the resin sheet 1a. The radar system 100 includes a millimeter-wave radar 50 and the resin sheet 1a. The millimeter-wave radar 50 uses an FMCW. The resin sheet 1a allows transmission of a millimeter wave emitted from the millimeter-wave radar 50 through the resin sheet 1a. As described above, the resin sheet 1a can increase the transmittance of a wideband millimeter wave. Because of this, the radar system 100 tends to have a high accuracy of object sensing.

As shown in FIG. 8, the radar system 100 includes, for example, a housing 30. The housing 30 protects the millimeter-wave radar 50. For example, the housing 30 is formed at least partly of the resin sheet 1a. The housing 30 is, for example, formed of the laminate 5.

The radar system 100 may include the resin sheet 1b instead of the resin sheet 1a.

EXAMPLES

The present invention will be described in more detail by examples. The present invention is not limited to the examples given below. First, methods for evaluation of Examples will be described.

<Transmission loss improvement rate>

Resin sheets according to Examples and Comparative Examples were each adhered using CS986440A to one principal surface of a resin substrate A having a relative permittivity of 2.4 and a thickness of 2 mm to produce a sample for transmission loss measurement. In the sample, the resin sheet had a principal surface having a relatively low relative permittivity and being in contact with the resin substrate A. A transmission coefficient $S_{21}$ obtained by allowing a millimeter wave with a frequency of 60 to 80 GHz to be perpendicularly incident on the resin sheet of the sample was measured with reference to a method described in JIS R 1679 (Measurement methods for reflectivity of electromagnetic wave absorber in millimeter wave frequency), and an average transmission loss $T^A_S$ [dB] in the frequency range of 60 to 80 GHz was determined. Moreover, a transmission coefficient $S_{21}$ obtained by allowing a millimeter wave with a frequency of 60 to 80 GHz to be perpendicularly incident on another resin substrate A to which no resin sheet was adhered was measured, and an average transmission loss $T^A_R$ [dB] in the frequency range of 60 to 80 GHz was determined. A transmission loss improvement rate R of each sample was determined by the following equation (2). Table 1 shows the results. It should be noted that the wavelength of a millimeter wave with a frequency of 60 Hz is 5 mm, and the wavelength of a millimeter wave with a frequency of 80 GHz is 3.75 mm. As a measurement apparatus was used a millimeterwave-microwave transmission loss measurement system, Model No. RTS01, manufactured by KEYCOM Corporation or a 30 mmΦ transmission loss-return loss measurement system for millimeter waves, Model No. RTS06, manufactured by KEYCOM Corporation.

$$\text{Improvement rate } R = |T^A_S - T^A_R|/|T^A_R| \quad \text{Equation (2)}$$

<Pore diameters of pores>

Cross-sections of each of the resin sheets according to Examples and Comparative Examples were measured by X-ray CT scanning using an X-ray CT scanner SKYSCAN 1272 manufactured by Bruker Corporation. The image analysis software Image J provided by the National Institutes of Health, USA, was used for reconstruction from cross-sectional images of the porous structure of each resin sheet, and a smallest pore diameter and a largest pore diameter were calculated. The average of the diameters of inscribed circles of pores in cross-sectional images taken between an interface and a position was determined as the smallest pore diameter, the interface being between a skin layer forming one principal surface of the resin sheet and the porous structure, the position being 200 $\mu$m away from the interface in the thickness direction of the resin sheet toward the other principal surface of the resin sheet. On the other hand, the average of the diameters of inscribed circles of pores in cross-sectional images taken between the other principal surface of the resin sheet and a position was determined as the largest pore diameter, the position being 500 $\mu$m away from the other principal surface in the thickness direction of the resin sheet toward the skin layer. Table 1 shows the results.

<Relative permittivity>

A relative permittivity of a resin forming the skeleton of the porous structure of each of the resin sheets according to Examples and Comparative Examples was measured at 10 GHz by a cavity resonance method. Table 1 shows the results. Each of the resin sheets according to Examples and Comparative Examples was measured by X-ray CT scanning using an X-ray CT scanner SKYSCAN 1272 manufactured by Bruker Corporation. On the basis of this measurement result, the porosity p in each of a plurality of 100-$\mu$m-thick layer portions forming the porous structure and arranged in the thickness direction of the resin sheet was determined. The average relative permittivity $\varepsilon_L$ of each of the layer portions was calculated by the above equation (1) from the thusdetermined porosity p, the relative permittivity $\varepsilon_K$ of the resin measured as described above, and the relative permittivity $\varepsilon_{air}$ (= 1.0) of air. The difference $\Delta\varepsilon$ between average relative permittivities $\varepsilon_L$ in each two adjacent layer portions of the plurality of layer portions was calculated. Table 1 shows the results. Table 1 also shows an average relative permittivity $\varepsilon_{LS}$ of one of the plurality of layer portions and an average relative permittivity $\varepsilon_{LA}$, of another one of the plurality of layer portions, the one layer portion being disposed closest to the resin substrate A in the sample, the other layer portion being disposed farthest from the resin substrate A in the sample.

<Thickness>

Thicknesses of the resin sheets according to Examples and Comparative Examples were measured using a micrometer. Table 1 shows the results.

<Example 1>

Four homogeneous porous resin layers each having a thickness of 500 $\mu$m were laminated to obtain a resin sheet according to Example 1. These porous resin layers included a polypropylene resin and an ethylene propylene rubber and had different relative permittivities. The four porous resin layers were laminated in order of increasing relative permittivity from one principal surface of the resin sheet according to Example 1 to the other principal surface thereof. Consequently, the resin sheet according to Example 1 had a relative permittivity increasing in stages from the one principal surface to the other principal surface. The porous resin layer forming the one principal surface of the resin sheet according to Example 1 had a 50-pm-thick solid skin layer.

<Example 2>

A mixture of supercritical nitrogen and polypropylene was molded by foaming and injection using a MuCell foaming injection molding apparatus to obtain a resin sheet according to Example 2. The polypropylene had a relative permittivity of 2.2. The resin sheet according to Example 2 had a 150-pm-thick solid skin layer forming one principal surface of the resin sheet. The resin sheet according to Example 2 had a relative permittivity increasing in stages from the one principal surface to the other principal surface.

<Example 3>

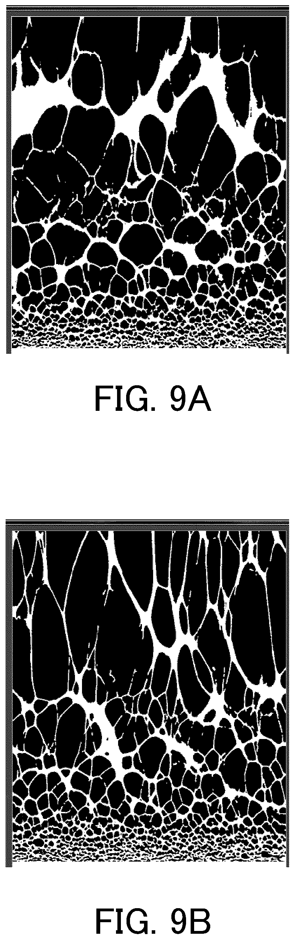

A mixture of supercritical nitrogen and polypropylene was molded by foaming and injection using a MuCell foaming injection molding apparatus to obtain a resin sheet according to Example 3. The resin sheet according to Example 3 had a 250-pm-thick solid skin layer forming one principal surface of the resin sheet. The resin sheet according to Example 3 had a relative permittivity increasing in stages from the one principal surface to the other principal surface. FIGS. 9A and 9B show examples of X-ray CT scan images of the resin sheet according to Example 3.

<Example 4>

A mixture of supercritical nitrogen and polyamide 6 was molded by foaming and injection using a MuCell foaming injection molding apparatus to obtain a resin sheet according to Example 4. The polyamide 6 had a relative permittivity of 4.9. The resin sheet according to Example 4 had a 350-pm-thick solid skin layer forming one principal surface of the resin sheet. The resin sheet according to Example 4 had a relative permittivity increasing in stages from the one principal surface to the other principal surface.

<Example 5>

A mixture of supercritical nitrogen and polypropylene was molded by foaming and injection using a MuCell foaming injection molding apparatus to obtain a resin sheet according to Example 5. The polypropylene had a relative permittivity of 2.2. The resin sheet according to Example 5 had a 500-pm-thick solid skin layer forming one principal surface of the resin sheet. The resin sheet according to Example 5 had a relative permittivity increasing in stages from the one principal surface to the other principal surface.

<Comparative Example 1 >

A resin sheet according to Comparative Example 1 having a porous structure and made from a UV-curable acrylic resin was produced by stereolithography using a 3D printer ProJet HD 3000 manufactured by 3D Systems, Inc. The resin sheet according to Comparative Example 1 had a relative permittivity increasing in stages from one principal surface to the other principal surface.

<Comparative Example 2>

A homogeneous polyethylene foam was cut to a given size to obtain a resin sheet according to Comparative Example 2. The resin sheet according to Comparative Example 2 had a relative permittivity being constant from one principal surface to the other principal surface.

<Comparative Example 3>

A resin sheet according to Comparative Example 3 having a porous structure and made from a UV-curable acrylic resin was produced by stereolithography using a 3D printer ProJet HD 3000 manufactured by 3D Systems, Inc. The resin sheet according to Comparative Example 3 had a relative permittivity increasing in stages from one principal surface to the other principal surface.

<Comparative Example 4>

A homogeneous polyethylene foam was cut to a thickness of 400 $\mu$m to obtain a resin sheet according to Comparative Example 4. The resin sheet according to Comparative Example 4 had a 30-pm-thick solid skin layer forming one principal surface of the resin sheet. The resin sheet according to Comparative Example 4 had a relative permittivity being constant from the one principal surface to the other principal surface.

As shown in Table 1, the improvement rate R was 50% or more for each of the samples including the resin sheets according to Examples. On the other hand, the improvement rate R was less than 50% for each of the samples including the resin sheets according to Comparative Examples. These indicate that it is advantageous for the porous structure of the resin sheet to have a relative permittivity varying in stages from the plane on which a millimeter wave is incident, the relative permittivity varying such that $\Delta\varepsilon$ is 0.30 or less, and to have only pores each having a pore diameter equal to or less than 10% of the wavelength of a millimeter wave.

[Table 1]

| | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|
| Difference $\Delta\varepsilon$ between average relative permittivities | 0.09 to 0.30 | 0.01 to 0.30 | 0.01 to 0.30 | 0.01 to 0.30 | 0.01 to 0.30 | 0.3 | - | 0.34 to 0.40 | - |
| Pore diameters [$\mu$m] of pores | 20 to 300 | 30 to 150 | 30 to 250 | 30 to 150 | 30 to 150 | 300 to 600 | 300 | 20 to 300 | 20 to 150 |
| Thickness [mm] | 2 | 1.5 | 3 | 4 | 2 | 1.5 | 1 | 1.5 | 0.4 |
| Relative permittivity of resin in porous structure | - | 2.2 | 2.2 | 4.9 | 2.2 | 2.2 | 2.2 | 2.2 | 2.2 |
| Thickness [$\mu$m] of skin layer | 50 | 150 | 250 | 350 | 500 | N/A | 100 | N/A | 30 |
| Average relative permittivity $\varepsilon_{LA}$ | 1.06 | 1.72 | 1.12 | 1.39 | 1.72 | 1.2 | 1.18 | 1.2 | 1.18 |
| Average relative permittivity $\varepsilon_{LS}$ | 1.84 | 1.96 | 1.96 | 4.12 | 1.96 | 1.7 | 1.18 | 2.15 | 1.18 |
| Improvement rate R [%] | 74 | 68 | 79 | 75 | 51 | 0 | 30 | 30 | 5 |

**Claims**

1. A resin sheet comprising:

   a porous structure configured to adjust transmission of a millimeter wave, wherein
   the porous structure has a relative permittivity varying in stages in a thickness direction of the resin sheet from a plane on which the millimeter wave is incident, the relative permittivity varying such that a difference between average relative permittivities in two adjacent layer portions is a predetermined value or less, the layer portions each having a particular thickness smaller than a wavelength of the millimeter wave, and
   the porous structure has, as pores, only pores each having a pore diameter equal to or less than 10% of the wavelength of the millimeter wave.

2. The resin sheet according to claim 1, wherein the particular thickness is 100 $\mu$m and the predetermined value is 0.3.

3. The resin sheet according to claim 1 or 2, wherein the porous structure has a thickness of 1 mm or more.

4. The resin sheet according to any one of claims 1 to 3, wherein the porous structure has a relative permittivity of 1.01 or more and 4.99 or less.

5. The resin sheet according to any one of claims 1 to 3, wherein

   the resin sheet has a surface in contact with air and a boundary surface in contact with a solid,
   the porous structure has: a first principal surface being the surface or being closest to the surface in the thickness direction of the resin sheet; and a second principal surface being the boundary surface, and
   the porous structure has a relative permittivity of 1.75 or less at the first principal surface and a relative permittivity of 1.8 or more at the second principal surface.

6. The resin sheet according to any one of claims 1 to 5, further comprising a skin layer having a thickness equal to or less than 10% of the wavelength of the millimeter wave, the skin layer forming a surface in contact with air.

7. The resin sheet according to any one of claims 1 to 6, wherein the pores of the porous structure each have a pore diameter of 20 to 500 $\mu$m.

8. A laminate configured to adjust transmission of a millimeter wave, comprising:

   a member; and
   the resin sheet according to any one of claims 1 to 7 covering a surface of the member, wherein
   the resin sheet has a surface in contact with air and a boundary surface in contact with the member,
   the porous structure has: a first principal surface being the surface in contact with air or being closest to the surface in contact with air in the thickness direction of the resin sheet; and a second principal surface being the boundary surface, and
   a relative permittivity of the porous structure at the second principal surface is closer to a relative permittivity of the member than a relative permittivity of the porous structure at the first principal surface.

9. A radar system comprising:

   a millimeter-wave radar that uses a frequency-modulated continuous wave; and
   the resin sheet according to any one of claims 1 to 7 allowing transmission of a millimeter wave emitted from the millimeter-wave radar through the resin sheet.

10. The radar system according to claim 9, further comprising a housing formed at least partly of the resin sheet.

FIG. 1

FIG. 2

Distance from surface 11a

FIG. 3

FIG. 4

FIG. 5

Distance from surface 11a

FIG. 6

FIG. 7

FIG. 8

FIG. 9A

FIG. 9B

## INTERNATIONAL SEARCH REPORT

International application No.

PCT/JP2021/007218

### A. CLASSIFICATION OF SUBJECT MATTER

C08J 9/12(2006.01)i; H01Q 1/42(2006.01)i; G01S 7/03(2006.01)i
FI: G01S7/03 246; H01Q1/42; C08J9/12 CEZ

According to International Patent Classification (IPC) or to both national classification and IPC

### B. FIELDS SEARCHED

Minimum documentation searched (classification system followed by classification symbols)
G01S7/00-7/42; G01S13/00-13/95; H01Q1/42; C08J9/12

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 10-150316 A (FURUKAWA ELECTRIC CO., LTD.) 02 June 1998 (1998-06-02) claims, paragraphs [0009]-[0015], fig. 1-2 | 1-10 |
| Y | JP 54-107655 A (NIPPON TELEGRAPH AND TELEPHONE CORPORATION) 23 August 1979 (1979-08-23) claims, page 2, upper left column, line 4 to lower left column, line 9, fig. 3, 5 | 1-10 |
| Y | WO 2011/033935 A1 (MITSUBISHI ELECTRIC CORP.) 24 March 2011 (2011-03-24) paragraphs [0004], [0009]-[0010], fig. 1-2 | 1-10 |

☒ Further documents are listed in the continuation of Box C.    ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05 April 2021 (05.04.2021) | 11 May 2021 (11.05.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

Form PCT/ISA/210 (continuation of second sheet) (January 2015)

**INTERNATIONAL SEARCH REPORT**

| International application No. |
| --- |
| PCT/JP2021/007218 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | WO 2017/104714 A1 (TECHNO POLYMER CO., LTD.) 22 June 2017 (2017-06-22) paragraphs [0144]-[0148], fig. 8-11 | 1-10 |
| Y | JP 2003-078325 A (HITACHI CABLE, LTD.) 14 March 2003 (2003-03-14) paragraphs [0037]-[0038], fig. 1-2 | 5 |
| A | JP 63-316904 A (SUMITOMO ELECTRIC INDUSTRIES, LTD.) 26 December 1988 (1988-12-26) entire text, all drawings | 1-10 |
| A | US 2017/0008251 A1 (RAYTHEON COMPANY) 12 January 2017 (2017-01-12) entire text, all drawings | 1-10 |

INTERNATIONAL SEARCH REPORT
Information on patent family members

International application No.

PCT/JP2021/007218

| Patent Documents referred in the Report | Publication Date | Patent Family | Publication Date |
|---|---|---|---|
| JP 10-150316 A | 02 Jun. 1998 | (Family: none) | |
| JP 54-107655 A | 23 Aug. 1979 | (Family: none) | |
| WO 2011/033935 A1 | 24 Mar. 2011 | US 2012/0127057 A1 paragraphs [0003], [0013]-[0014], fig. 1-2 EP 2479840 A1 | |
| WO 2017/104714 A1 | 22 Jun. 2017 | EP 3392306 A1 paragraphs [0237]-[0241], fig. 8-11 CN 108603005 A | |
| JP 2003-078325 A | 14 Mar. 2003 | (Family: none) | |
| JP 63-316904 A | 26 Dec. 1988 | (Family: none) | |
| US 2017/0008251 A1 | 12 Jan. 2017 | (Family: none) | |

**EP 4 130 117 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150109162 A1
- CS 986440 A